Europäisches Patentamt

European Patent Office

Office européen des brevets

(11) Publication number: **0 176 524**
**B1**

(12) **EUROPEAN PATENT SPECIFICATION**

(45) Date of publication of patent specification: **26.10.88**

(51) Int. Cl.⁴: **B 29 C 51/08,** B 29 C 51/42, B 29 C 51/40

(21) Application number: **85901321.1**

(22) Date of filing: **27.03.85**

(86) International application number:
**PCT/AU85/00062**

(87) International publication number:
**WO 85/04364 10.10.85 Gazette 85/22**

(54) METHOD OF MOULDING.

(30) Priority: **27.03.84 AU 4268/84**

(43) Date of publication of application:
**09.04.86 Bulletin 86/15**

(45) Publication of the grant of the patent:
**26.10.88 Bulletin 88/43**

(84) Designated Contracting States:
**AT BE CH DE FR GB LI LU NL SE**

(56) References cited:
**AU-B-3 148 067**
**AU-B-5 058 564**
**AU-B-5 206 859**
**AU-B-5 438 859**
**AU-B-6 450 960**
**GB-A-1 214 101**
**GB-A-2 048 150**
**GB-A-2 100 645**
**US-A-2 832 094**
**US-A-2 973 558**
**US-A-3 003 190**
**US-A-3 662 048**
**US-A-4 043 735**

(73) Proprietor: **ELLEMOR, John Warwick**
**Cnr. Main Road and One Tree Hill Road**
**Ferny Creek, VIC 3786 (AU)**

(72) Inventor: **ELLEMOR, John Warwick**
**Cnr. Main Road and One Tree Hill Road**
**Ferny Creek, VIC 3786 (AU)**

(74) Representative: **Alexander, Thomas Bruce et al**
**Boult, Wade & Tennant 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to improvements in methods of and apparatus for blow moulding from preformed material. The preformed material may be a flow of solid or tubular glass or plastics for production of bottles and other hollow bodied articles although the preferred material is thermoplastic sheet material.

Many methods of blow moulding, particularly blow moulding of thermoplastic sheet are known including:

i) Pressure forming wherein a heated sheet, clamped between at least two parts of a mould, is stretched by gas under pressure to conform with the internal shape of the mould.

ii) Vacuum forming wherein a vacuum is applied to suck the clamped heated sheet into conformity with the internal shape of a mould.

iii) Mechanical pressure forming wherein an additional part or parts applies mechanical pressure to one or both surfaces of the clamped heated sheet so that the sheet conforms to the shape of the additional part or parts. This includes the use of male forming tools or inflatable membrane or bags within the mould.

iv) A variation of pressure forming wherein the sheet is stretched through an opening with no limitations beyond that opening, the shape of the article thus formed being determined by the volume of introduced gas.

Other methods, which may include features of the above most commonly used methods, are also known.

A problem associated with the above methods for forming articles particularly in the case of articles formed from sheet is that when forming complicated shapes, particularly shapes formed in a mould which is made from more than two parts and is under-cut as for example a re-entrant diffuser for a lighting fixture, considerable thinning occurs as the last sector stretches to achieve the final shape at corners or in deep recesses. In such cases this thinning often precludes the possibility of forming these articles from thermoplastic sheet, as present practice limits the depth of undercuts obtainable in the final article.

The most likely method to be used to form such articles would be pressure forming as moulds required for such shapes are usually made from more than two parts and sealing problems often preclude the vacuum forming method. Mechanical pressure forming for such shapes is unlikely to be satisfactory.

Another problem particularly relevant to pressure forming is that the surface of the sheet that has come into contact with the mould is often marred by small pit marks which in many cases would require rubbing down to a smooth surface and then repolishing. This problem often precludes the use of smooth sheet and manufacturers are forced to use low gloss or patterned sheet.

Prior art document US-A-3 662 048 discloses a method of moulding preformed material (24) into an article with a forming element (10) in which the material is moulded by being stretched to a position adjacent the forming element, and, while the material is being so moulded, fluid is introduced via (14, 16) ff at a sufficient pressure to act as a barrier between the material and the forming element, wherein the temperature of the fluid barrier is such as to allow the material to stretch.

It is an object of the present invention to provide an improved mould method and apparatus in which localised thinning is minimised and to permit the moulding of some shapes that have hitherto not been possible.

The present invention can be utilised to best advantage in conjunction with the method described as pressure forming particularly when forming complex shapes. Features of the invention can also be useful when forming certain shapes by mechanical pressure forming or by a combination of these methods or combining either or both of these methods with vacuum forming.

According to the present invention, there is provided a method of moulding preformed material into an article with a forming element in which the material is moulded by being stretched to a position adjacent the forming element and, while the material is being so moulded, fluid is introduced at a sufficient pressure to act as a barrier between the material and those portions of the forming element which would otherwise be first contacted by the material, characterised in that the fluid providing said barrier is heated such as to allow the material to stretch and in that the fluid barrier is controlled to in turn control the thickness of the article so moulded.

Use of the barrier fluid in preventing contact between the mould, tool, bag or membrane and the material, improves the surface finish of the article.

The introduction of the barrier fluid is, in the case of pressure forming, additional to the forming fluid under pressure used for moulding and stretching the material to the limits provided by the internal shape of the mould. The forming fluid may also be temperature controlled. Both or either fluids may be air.

As the stretching sheet progressively conforms to the shape of the mould a thin layer of the barrier fluid prevents it from contacting the surface of the mould but still allows the sheet to closely conform to the shape of the mould. By preventing the forming sheet from contacting the mould a more uniform thickness throughout the greater part of the finished article is achieved or if desired the article being moulded can, by adjustments of temperature, have thicker or thinner sections in selected areas. This process has the further advantage gained by the selective control of thickness that can also be used to provide the possibility of forming shapes previously impossible to mould from sheet by any other known method.

Upon achieving the desired final shape, the forming fluid can be maintained at sufficient pressure to hold the shape while excess fluid can escape by way of a separate opening or openings allowing a flow of fluid, preferably at a lower temperature, to circulate and cool the moulded article. Due to this circulating fluid, the mould can be operated at a higher temperature resulting in further improvement of the surface finish.

In addition the temperature of the barrier fluid supply may be lowered at this time to further assist in the cooling of the moulded article.

Alternatively the material may be shaped by stretching with a male forming tool, the introduced temperature controlled fluid acting as a barrier between the material and the forming tool to selectively control the thickness of the material.

An inflatable bag or membrane could also be used as the forming tool. Other possibilities include leading edges of mechanical tools and diaphragms, all once again incorporating fluid outlets to create the fluid barrier. Although the fluid may be gas, preferably air, it is to be understood that any fluid or gas inert to the material being formed may be used.

The present invention also provides apparatus for moulding an article from preformed material comprising means to hold the material, a forming element, means to stretch the material to a position adjacent the forming element, means to introduce fluid while the material is being so moulded at a sufficient pressure to act as a barrier between the material and those portions of the forming element which would otherwise be first contacted by the material, characterised by having means to heat the barrier fluid to thereby control the temperature of said barrier fluid and to thereby control the thickness of the article so moulded.

The mould, tool, membrane or bag is provided with one or a number of outlets for the fluid, usually air. The outlets may be arranged randomly, in regular patterns and usually at or adjacent to the point or points whereat the material will first come into contact with the mould, or at or adjacent to the leading edges. The outlets may be of many shapes, including pinholes, gaps or slits. The mould, tool, membrane or bag may even be porous, so that the outlets are dispersed over the porous surface.

The outlets are connected to a supply of fluid under pressure, means for adjusting and controlling both the pressure and temperature of the fluid being provided, so that at selected times during the moulding cycle, temperature controlled fluid is forced at a suitable pressure into the mould to provide the barrier.

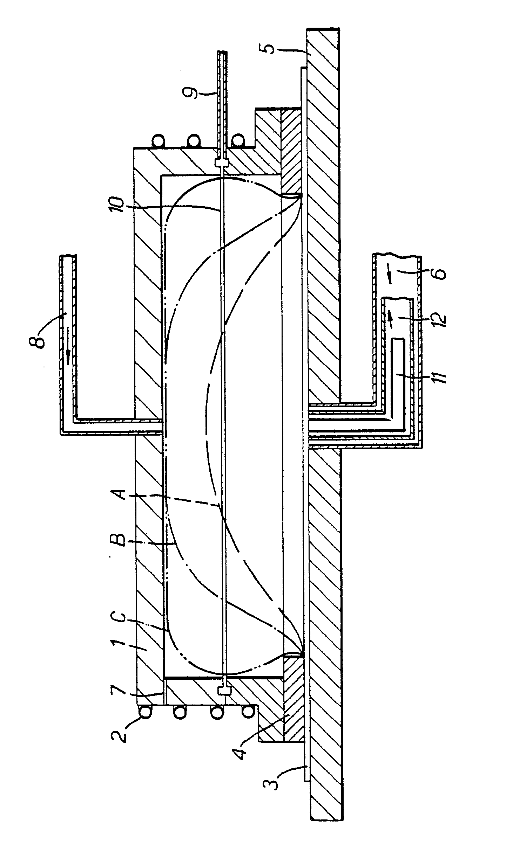

But in order that the invention may be more clearly understood, reference will now be made to the accompanying drawing which shows a mould and accessories designed to produce a shape suitable as a re-entrant acrylic diffuser for use in a circular fluorescent light fixture.

The mould 1 is preheated by a flow of temperature controlled oil through heating control tube 2. The assembly comes apart to admit the introduction of preheated sheet 3 and then comes together, as illustrated clamping the sheet between the combined two halves of split ring 4 and sealing plate 5. Heated air is introduced through forming inlet 6, causing the sheet 3 to stretch. As the sheet expands, it causes air trapped within mould 1 to escape through vent 7. As position (A) is reached and it is about to make contact with the upper surface of the mould 1, a second supply of heated air is introduced through mould air outlet 8 providing a barrier between the sheet 3 and the mould 1. As the sheet reaches position (B), the combination of mould 1 temperature and barrier air temperature is such as to allow the sheet 3 to stretch uniformly. Upon reaching position (C), where sheet 3 is about to contact the wall of the mould 1, heated air, delivered to the wall of the mould through a second mould air outlet 9 and supplied by way of a chamber to gap 10, similarly prevents contact of the sheet with the mould and allows the sheet 3 to stretch until it closely conforms with the inside shape of the mould. At this point the rising air pressure within the sheet 3, supplied through forming air inlet 6 causes a pressure actuated switch (not shown) attached to pressure sensor tube 11 to stop air flowing into the mould 1 through mould air outlet 8 and through gap 10 and at the same time disconnects the heating element supplying air through forming air inlet 6. As the pressure rises still higher and the desired shape is achieved a second pressure actuated switch (not shown) attached to pressure sensor tube 11 opens a solenoid valve (not shown) connected to exhaust outlet 12 through a restriction which is adjusted to allow sufficient of the now cold air to circulate within the shape to assist cooling, while at the same time maintaining sufficient pressure to prevent the shape collapsing during the cooling process. The cooling air within the article so formed allows a temperature differential across the thickness of the article to facilitate removal of the article from the hot mould. Upon the article cooling sufficiently to allow removal from the mould, the assembly opens including the separation of the two halves of the split ring.

When using the above described apparatus to form a 19 3/8" (492 mm) diameter diffuser from 1/8" (3.2 mm) cast acrylic sheet, the forming fluid was air at approximately 50 psi (3.45 bar) while the barrier fluid, again air was maintained at a pressure at least 10% higher. The thickness of the diffuser varied between 0.9 and 1 mm, except in the rim area where the increased thickness was used for mounting purposes.

In this simple explanation many of the details have been deleted, such as arrangements for directing the forming air to facilitate rapid cooling, the various pressure differentials required and diffusing arrangements for the forming air, as these and other details are well known to those skilled in the art, and have no bearing on the principles involved. The circulation of cold air within the moulded article during the final stage of the cycle allows the use of a higher temperature mould with also improves the surface finish.

Although the invention has been described with reference to the blow moulding of thermoplastic sheet material, it will be apparent that it can equally apply to moulding of other preformed material, such as a flow of solid or tubular glass or plastic for bottles and other hollow bodied articles.

**Claims**

1. A method of moulding preformed material into an article with a forming element (1) in which the material (3) is moulded by being stretched to a position adjacent the forming element and, while the material is being so moulded, fluid is introduced at a sufficient pressure to act as a barrier between the material and those portions of the forming element which would otherwise be first contacted by the material, characterised in that the fluid providing said barrier is heated such as to allow the material to stretch and in that the fluid barrier is controlled to in turn control the thickness of the article so moulded.

2. A method as claimed in claim 1 further characterised in that the material is stretched to a position adjacent the forming element by applying forming fluid under pressure and at a temperature to stretch the material to a position adjacent limits provided by the internal shape of the forming element.

3. A method as claimed in claim 2 further characterised in that, upon achieving the desired final shape of the material, the forming fluid is maintained at sufficient pressure to hold the shape while excess forming fluid escapes by way of a separate opening or openings (12), a flow of cold forming fluid being circulated to cool the moulded material.

4. A method as claimed in claim 3 further characterised in that, upon achieving the desired final shape, the temperature of the barrier fluid is lowered to further assist in cooling the moulded material.

5. A method as claimed in claim 1 further characterised in that respective said forming elements are provided to opposite sides of the moulding material, one of said elements being a female mould and the other a male forming tool, and in that fluid is introduced at a sufficient pressure on both sides of the material to provide respective barriers between the material and the mould and between the material and the tool.

6. A method as claimed in claim 5 further characterised in that the male forming tool is an inflatable bag.

7. A method as claimed in any one of the preceding claims further characterised in that the barrier fluid and/or the forming fluid is an inert gas.

8. A method as claimed in any one of claims 1 to 6 further characterised in that the barrier fluid and/or the forming fluid is air.

9. A method as claimed in any one of the preceding claims further characterised in that a lowered barrier fluid temperature is used to create selectively thicker sections in the article.

10. A method as claimed in claim 1 further characterised in that said forming element comprises a male forming tool.

11. Apparatus for moulding an article from preformed material comprising means (4, 5) to hold the material, a forming element (1), means (6) to stretch the material to a position adjacent the forming element (1), means (8, 9) to introduce fluid while the material is being so moulded at a sufficient pressure to act as a barrier between the material and those portions of the forming element which would otherwise be first contacted by the material, characterised by having means to heat the barrier fluid to thereby control the temperature of said barrier fluid and to thereby control the thickness of the article so moulded.

12. Apparatus as claimed in claim 11 further characterised in that the forming element comprises a forming mould and said stretching means is a male forming tool, and in that means is provided to introduce fluid at a sufficient pressure on both sides of the material to provide respective barriers between the material and the mould and between the material and the tool.

13. Apparatus as claimed in claim 11 further characterised in that stretching means comprises vacuum means.

14. Apparatus as claimed in claim 11, 12 or 13 further characterised by one or more outlets for the barrier fluid.

15. Apparatus as claimed in claim 14 further characterised in that the outlets are provided in the forming element at or adjacent to the point or points whereat the material will first come into contact with the mould forming element in the absence of the barrier.

16. Apparatus as claimed in claim 14 or 15 further characterised in that the outlets are arranged in regular patterns.

17. Apparatus as claimed in claim 14 or 15 further characterised in that the outlets are randomly arranged.

18. Apparatus as claimed in any one of claims 11 to 17 further characterised in that the forming element has a porous surface to provide the outlets for the fluid.

19. Apparatus as claimed in any one of claims 11 to 18 further characterised by a supply of said fluid under pressure in communication with said fluid introduction means, and means for adjusting and controlling both the pressure and temperature of the fluid.

20. Apparatus as claimed in claim 11 further characterised in that said stretching means comprises means to apply a temperature controlled forming fluid under pressure to stretch the material to limits provided by the internal shape of the forming element.

21. Apparatus as claimed in any one of claims 11 and 13 to 20 further characterised in that said forming element comprises a male forming tool.

22. Apparatus as claimed in any one of claims 11 and 13 to 20 further characterised in that said stretching means comprises an inflatable bag.

## Patentansprüche

1. Verfahren zum Formen von vorgeformtem Werkstoff zu einem Gegenstand mittels eines Formelements (1), wobei der Werkstoff (3) unter Strecken in eine an das Formelement angrenzende Lage geformt und währenddessen Strömungsmittel mit einem Druck eingeleitet wird, der ausreicht, um als Barriere zwischen dem Werkstoff und denjenigen Teilen des Formelements zu wirken, die sonst als erste mit dem Werkstoff in Berührung kommen würden, dadurch gekennzeichnet, daß das die Barriere bildende Strömungsmittel derart erwärmt wird, daß es eine Streckung des Materials gestattet, und daß die Strömungsmittel-Barriere zur Steuerung der Dicke des geformten Gegenstands gesteuert wird.

2. Verfahren nach Anspruch 1, dadurch gekennzeichnet, daß der Werkstoff dadurch auf eine an das Formelement angrenzende Lage gestreckt wird, daß Formungs-Strömungsmittel unter Druck und bei einer Temperatur angewandt wird, bei der der Werkstoff in eine Lage an durch die innere Gestalt des Formelements vorgegebene Grenzen gestreckt wird.

3. Verfahren nach Anspruch 2, dadurch gekennzeichnet, daß bei Erreichen der gewünschten endgültigen Gestalt des Werkstoffs das Formungs-Strömungsmittel unter ausreichendem Druck gehalten wird, um die Gestalt zu halten, während überschüssiges Formungs-Strömungsmittel durch eine separate Öffnung oder separate Öffnungen (12) entweicht, wobei kaltes Formungs-Strömungsmittel zur Kühlung des geformten Werkstoffs strömt.

4. Verfahren nach Anspruch 3, dadurch gekennzeichnet, daß bei Erreichen der gewünschten endgültigen Gestalt die Temperatur des Barriere-Strömungsmittels abgesenkt wird, um die Abkühlung des geformten Werkstoffs zu unterstützen.

5. Verfahren nach Anspruch 1, dadurch gekennzeichnet, daß jeweilige Formelemente auf entgegengesetzten Seiten des Formwerkstoffs angeordnet werden, wobei eines der Elemente eine Matritze und das andere ein Patritzen-Werkzeug ist, und daß Strömungsmittel auf beiden Seiten des Werkstoffs unter ausreichendem Druck eingeleitet wird, um jeweils Barrieren zwischen dem Werkstoff und der Form sowie zwischen dem Werkstoff und dem Werkzeug vorzusehen.

6. Verfahren nach Anspruch 5, dadurch gekennzeichnet, daß das Patritzen-Werkzeug ein aufblasbares Kissen ist.

7. Verfahren nach einem der vorhergehenden Ansprüche, dadurch gekennzeichnet, daß das Barriere- und/oder das Formungs Strömungsmittel ein Inertgas ist.

8. Verfahren nach einem der Ansprüche 1 bis 6, dadurch gekennzeichnet, daß das Barriere- und/oder Formungs-Strömungsmittel Luft ist.

9. Verfahren nach einem der vorhergehenden Ansprüche, dadurch gekennzeichnet, daß zur selektiven Erzeugung dickerer Abschnitte in dem Gegenstand mit einer verringerten Temperatur des Barriere-Strömungsmittels gearbeitet wird.

10. Verfahren nach Anspruch 1, dadurch gekennzeichnet, daß das Formelement ein Patritzen-Werkzeug umfaßt.

11. Vorrichtung zum Formen eines Gegenstands aus vorgeformtem Werkstoff, umfassend eine Einrichtung (4, 5) zum Halten des Werkstoffs, ein Formelement (1), eine Einrichtung (6) zum Strecken des Materials in eine an das Formelement (1) angrenzende Lage, eine Einrichtung (8, 9) zum Einleiten eines Strömungsmittels, während der Werkstoff geformt wird, unter Druck, um als Barriere zwischen dem Werkstoff und denjenigen Teilen des Formelements zu wirken, die sonst als erste mit dem Werkstoff in Berührung kommen würden, gekennzeichnet durch eine Einrichtung zur Erwärmung des Barriere-Strömungsmittels zur Steuerung von dessen Temperatur und damit zur Steuerung der Dicke des geformten Gegenstands.

12. Vorrichtung nach Anspruch 11, dadurch gekennzeichnet, daß das Formelement eine Form umfaßt und die Streckeinrichtung ein Patritzen-Werkzeug ist, und daß eine Einrichtung vorgesehen ist, um Strömungsmittel bei ausreichendem Druck auf beiden Seiten des Werkstoffs einzuleiten, um jeweils Barrieren zwischen dem Werkstoff und der Form sowie zwischen dem Werkstoff und dem Werkzeug vorzusehen.

13. Vorrichtung nach Anspruch 11, dadurch gekennzeichnet, daß die Streckeinrichtung eine Unterdruckeinrichtung umfaßt.

14. Vorrichtung nach Anspruch 11, 12 oder 13, gekennzeichnet durch einen oder mehrere Auslässe für das Barriere-Strömungsmittel.

15. Vorrichtung nach Anspruch 14, dadurch gekennzeichnet, daß die Auslässe in dem Formelement an oder nahe derjenigen Stelle oder denjenigen Stellen vorgesehen sind, wo das Material bei Fehlen der Barriere mit dem Formelement zuerst in Berührung kommt.

16. Vorrichtung nach Anspruch 14 oder 15, dadurch gekennzeichnet, daß die Auslässe in regelmäßigen Mustern angeordnet sind.

17. Vorrichtung nach Anspruch 14 oder 15, dadurch gekennzeichnet, daß die Auslässe regellos angeordnet sind.

18. Vorrichtung nach einem der Ansprüche 11 bis 17, dadurch gekennzeichnet, daß das Formelement eine poröse Oberfläche aufweist, die die Auslässe für das Strömungsmittel bildet.

19. Vorrichtung nach einem der Ansprüche 11 bis 18, gekennzeichnet durch eine mit der Einrichtung zur Einleitung des Strömungsmittels in Verbindung stehende Einrichtung zur Zuführung des Strömungsmittels unter Druck sowie eine Einrichtung zur Einstellung und Steuerung sowohl des Drucks als auch der Temperatur des Strömungsmittels.

20. Verfahren nach Anspruch 11, dadurch gekennzeichnet, daß die Streckeinrichtung eine Einrichtung umfaßt, die ein temperaturgesteuertes Formungs-Strömungsmittel unter Druck zuführt, um den Werkstoff auf durch die innere Gestalt des Formelements vorgegebene Grenzen zu strecken.

21. Vorrichtung nach einem der Ansprüche 11 und 13 bis 20, dadurch gekennzeichnet, daß das Formelement ein Patritzen Werkzeug umfaßt.

22. Vorrichtung nach einem der Ansprüche 11 und 13 bis 20, dadurch gekennzeichnet, daß die Streckeinrichtung ein aufblasbares Kissen umfaßt.

## Revendications

1. Méthode de moulage d'un matériau préformé en un produit à l'aide d'un élément de mise en forme (1) dans lequel le matériau (3) est moulé en étant étiré jusqu'à une position adjacente à l'élément de mise en forme et, tandis que le matériau est ainsi moulé, du fluide est introduit à une pression suffisante pour jouer le rôle d'une barriére entre le matériau et ces parties de l'élément de mise en forme qui, autrement, auraient été les premières en contact avec le matériau, caractérisée en ce que le fluide générant la dite barrière est chauffé de façon à permettre au matériau de s'étirer et en ce que la barrière fluide est règlée de façon à régler à son tour l'épaisseur du produit ainsi moulé.

2. Méthode selon la revendication 1, caractérisée en outre en ce que le matériau est étirè jusqu'à une position adjacente à l'élément de mise en forme par application d'un fluide de mise en forme sous pression et à une température permettant l'étirement du matériau jusqu'à une position adjacente aux limites constituées par le profil interne de l'élément de mise en forme.

3. Méthode selon la revendication 2, caractérisée en outre en ce que après l'obtention de la forme finale souhaitée du matériau, le fluide de mise en forme est maintenu à une pression suffisante pour conserver la forme tandis que le fluide de mise en forme en excés s'échappe par le biais d'une ouverture ou d'ouvertures (12) séparées, un flux de fluide de mise en forme froid étant mis en circulation pour refroidir le matériau moulé.

4. Méthode selon la revendication 3, caractérisée en outre en ce que après l'obtention de la forme finale désirée, la température du fluide barriére est abaissée pour participer également au refroidissement du matériau moulé.

5. Méthode selon la revendication 1, caractèrisée en outre en ce que les dits éléments de mise en forme respectifs sont disposés des deux côtés opposés du matériau à mouler, l'un des dits èlèments étant un moule femelle et l'autre un outil de mise en forme màle, et en ce que le fluide est introduit à une pression suffisante des deux côtés du matériau de façon à générer des barriéres respectives entre le matériau et le moule et entre le matériau et l'outil.

6. Méthode selon la revendication 5, caractérisée en outre en ce que l'outil de mise en forme màle est une enveloppe gonflable.

7. Méthode selon l'une quelconque des revendications précédentes, caractérisée en outre en ce que le fluide barrière et/ou le fluide de mise en forme est un gaz inerte.

8. Méthode selon l'une quelconque des revendications 1 à 6, caractérisée en outre en ce que le fluide barriére et/ou le fluide de mise en forme est de l'air.

9. Méthode selon l'une quelconque des revendications précédentes caractérisée en outre en ce qu'un fluide barrière à température abaissée est utilisé pour créer de façon sélective des sections plus épaisses dans le produit.

10. Méthode selon la revendication 1, caractérisée en outre en ce que le dit élément de mise en forme comprend un outil de mise en forme màle.

11. Dispositif pour le moulage d'un article a partir d'un matériau préformé comprenant des moyens (4 et 5) pour maintenir le matériau, un élément de mise en forme (1), des moyens (6) pour étirer le matériau jusqu'à une position adjacente à l'élément de mise en forme (1), des moyens (8, 9) pour introduire le fluide, tandis que le matériau est ainsi moulé, à une pression suffisante pour jouer le rôle d'une barrière entre le matériau et ces portions de l'élément de mise en forme qui, autrement, auraient été les premières en contact avec le matériau, caractérisé en ce qu'il a des moyens pour chauffer le fluide barrière de façon à contrôler la température du dit fluide barrière et de façon à contrôler l'épaisseur du produit ainsi moulé.

12. Dispositif selon la revendication 11, caractérisè en outre en ce que l'élément de mise en forme comprend un moule de mise en forme, en ce que le dit moyen d'étirement est un outil de mise en forme màle et en ce que le dit moyen est équipé pour introduire du fluide à une pression suffisante des deux côtés du matériau pour générer des barriéres respectives entre le matériau et le moule et entre le matériau et l'outil.

13. Dispositif selon la revendication 11, caractérisé en outre en ce que le moyen d'étirement comprend des moyens pour faire le vide.

14. Dispositif selon la revendication 11, 12 ou 13, caractérisé en outre par une ou plusieurs sorties pour le fluide barrière.

15. Dispositif selon la revendication 14, caractérisé en outre en ce que les sorties sont ménagées dans l'élément de mise en forme au point, ou aux points, ou adjacent à ceux-ci, sur lequel ou lesquels le matériau viendrait en premier en contact avec le moule de l'élément de mise en forme en l'absence de la barrière.

16. Dispositif selon l'une des revendications 14 ou 15, caractérisé en outre en ce que les sorties sont disposées selon un profil régulier.

1. Dispositif selon la revendication 14 ou 15, caractérisé en outre en ce que les sorties sont disposées de façon aléatoire.

18. Dispositif selon l'une quelconque des revendications 11 à 17, caractérisé en outre en ce que l'élément de mise en forme a une surface poreuse pour permettre les sorties de fluide.

19. Dispositif selon l'une quelconque des revendications 11 à 18, caractérisé en outre par une alimentation du dit fluide sous pression en communication avec les dits moyens d'introduction d'un fluide et des moyens pour régler et contrôler à la fois la pression et la température du fluide.

20. Dispositif selon la revendication 11, caractérisé en outre en ce que le dit moyen d'étirement comprend un moyen pour appliquer un fluide de mise en forme à température contrôlée sous pression pour étirer le matériau jusqu'aux limites que constituées par le profil interne de l'élément de mise en forme.

21. Dispositif selon l'une quelconque des revendications 11 et 13 à 20, caractérisé en outre en ce que le dit élément de mise en forme comprend un outil de mise en forme mâle.

22. Dispositif selon l'une quelconque des revendications 11 et 13 à 20, caractérisé en outre en ce que le dit moyen d'étirement comprend une enveloppe gonflable.

0 176 524